# EUROPEAN PATENT APPLICATION

(11) **EP 3 291 140 A1**
(43) Date of publication of application: **07.03.2018**
(21) Application number: 17188404.2
(22) Date of filing: 29.08.2017
(51) Int. Cl.: G06K 9/00, G06K 9/22, G06F 17/30, B60K 37/00

(54) **INFORMATION PROVIDING SYSTEM OF VEHICLE**

(30) Priority: 31.08.2016 JP 2016168755
(71) Applicant: Mitsubishi Jidosha Kogyo Kabushiki Kaisha, Tokyo 108-8410 (JP)
(72) Inventor: HO, Shien, Tokyo 108-8410 (JP); HAYASHI, Isamu, Tokyo 108-8410 (JP)
(74) Representative: Vossius & Partner Patentanwälte Rechtsanwälte mbB

(57) **Abstract**

An information providing system of a vehicle includes a portable terminal that captures a picture of an inquiry target of an apparatus and equipment of the vehicle and transmits the captured picture, a recognition unit that recognizes the inquiry target indicated by the picture transmitted from the portable terminal, a processing unit that has a plurality of pieces of explanation information for explanation of the apparatus and the equipment, and selects and transmits the explanation information corresponding to the inquiry target recognized by the recognition unit, and a display unit that is provided in the vehicle to display the explanation information transmitted from the processing unit.

## Description

### BACKGROUND OF THE INVENTION

### 1. Technical Field

The present invention relates to an information providing system of a vehicle, which provides information on an apparatus or equipment provided in the vehicle.

### 2. Related Art

There has been known a technology in which a mobile terminal captures a shot (a photograph and the like) and transmits the shot to a communication system, and the communication system detects an object (a barcode and the like) in the shot, selects a place associated with the object in consideration of the position of the mobile terminal, and displays information (a coupon and the like) associated with the place and the object on the mobile terminal (See JP-T-2015-515669).

In recent years, with the high functionality and multi-functionality of an apparatus or equipment provided in a vehicle, a vehicle is convenient more and more. However, due to a lack of knowledge and information for new functions, it is probable that a driver or a passenger will insufficiently use the functions. For example, even though a driver or a passenger takes an interest in switches or icons in a vehicle to operate the switches and the icons, if the driver or the passenger does not understand what the switches and the icons are, the driver or the passenger hesitates to manipulate it.

Furthermore, even though the driver or the passenger takes an interest in parts disposed in an engine room, it is not easy to find an explanation of the parts from an instruction manual of the vehicle.

In recent years, a technology of a voice recognition system, an image recognition system and the like is developed. If it is possible to provide information on an apparatus or equipment of a vehicle by using such a technology, it is possible to appropriately provide necessary information to a driver or a passenger. Furthermore, it is possible to appropriately provide necessary information to a driver or a passenger who has difficulty in conversation.

The present invention has been made to solve the above-described problem, and an object of the present invention is to provide an information providing system of a vehicle, capable of appropriately providing necessary information.

### SUMMARY OF THE INVENTION

An information providing system according to an aspect to solve the above-described problem includes a portable terminal that captures a picture of an inquiry target of an apparatus and equipment of the vehicle and transmits the captured picture, a recognition unit that recognizes the inquiry target indicated by the picture transmitted from the portable terminal, a processing unit that has a plurality of pieces of explanation information for explanation of the apparatus and the equipment, and selects and transmits the explanation information corresponding to the inquiry target recognized by the recognition unit, and a display unit that is provided in the vehicle to display the explanation information transmitted from the processing unit.

According to the above described invention, it is possible to appropriately provide a driver or a passenger with necessary information on an apparatus or equipment of a vehicle. As a consequence, it is possible to improve vehicle's convenience.

### BRIEF DESCRIPTION OF THE DRAWINGS

Fig. 1 is a schematic configuration diagram illustrating an information providing system of a vehicle according to a first embodiment of the present invention.
Fig. 2 is a flowchart for explaining an example of transmission/reception of information in the information providing system of a vehicle illustrated in Fig. 1.
Figs. 3A and 3B are diagrams illustrating an example of transmission/reception of information in a display apparatus and a portable terminal in the information providing system of a vehicle illustrated in Fig. 1, Fig. 3A is an example of the portable terminal, and Fig. 3B is an example of the display apparatus.
Fig. 4 is a schematic configuration diagram illustrating an information providing system of a vehicle according to a second embodiment of the present invention.
Fig. 5 is a flowchart for explaining an example of transmission/reception of information in the information providing system of a vehicle illustrated in Fig. 4.
Figs. 6A and 6B are diagrams illustrating an example of transmission/reception of information in a display apparatus and a portable terminal in the information providing system of a vehicle illustrated in Fig. 4, Fig. 6A is an example of the portable terminal, and Fig. 6B is an example of the display apparatus.

### DETAILED DESCRIPTION OF THE INVENTION

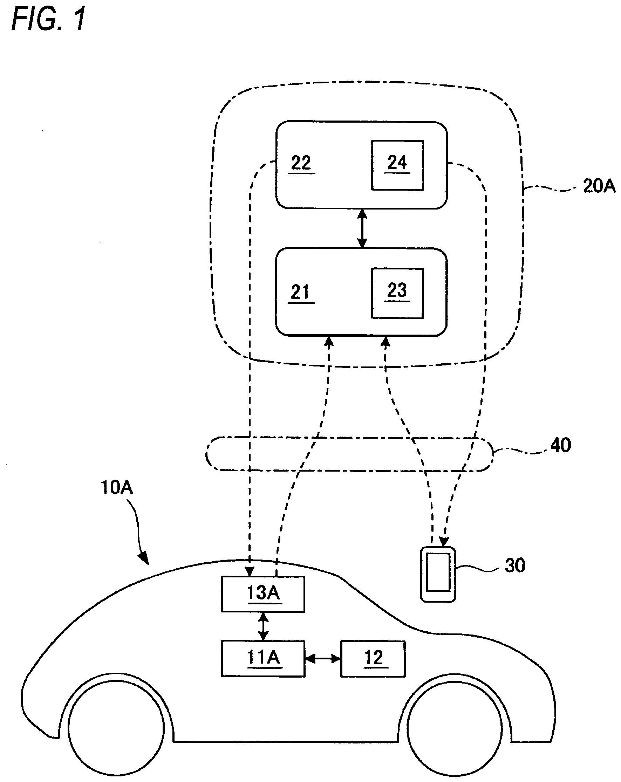

In the following, with reference to Figs. 1 to 6B, embodiments of an information providing system of a vehicle according to the present invention will be described.

### First Embodiment

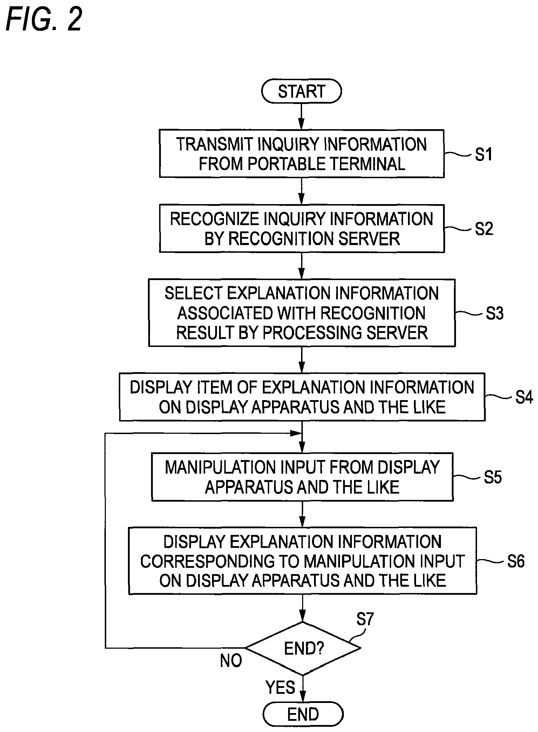

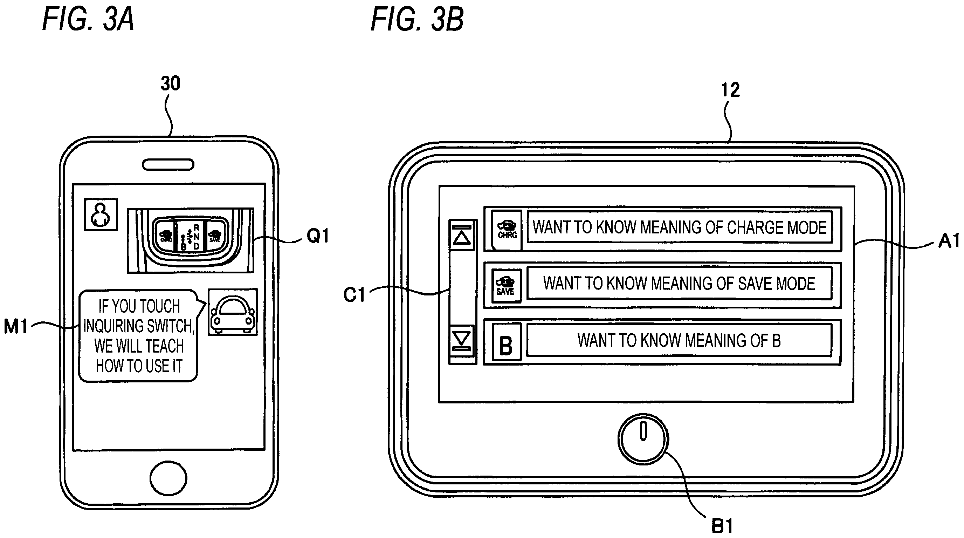

Fig. 1 is a schematic configuration diagram illustrating an information providing system of a vehicle of the present embodiment. Fig. 2 is a flowchart for explaining an example of transmission/reception of information in the information providing system of a vehicle illustrated in Fig. 1. Figs. 3A and 3B are diagrams illustrating an example of transmission/reception of information in a display apparatus and a portable terminal in the information providing system of a vehicle illustrated in Fig. 1.

As illustrated in Fig. 1, the information providing system of a vehicle of the present embodiment has a processing apparatus 11A, a display apparatus 12 (a display unit) with an input/output function, and a communication apparatus 13A, which are provided in a vehicle 10A, and further has a recognition server 21 (a recognition unit) and a processing server 22 (a processing unit and a learning unit) provided on a cloud 20A. Moreover, the information providing system has a portable terminal 30. Fig. 1 illustrates one vehicle 10A and one portable terminal 30; however, the recognition server 21 and the processing server 22 provided on the cloud 20A correspond to a plurality of vehicles 10A and a plurality of portable terminals 30.

The processing apparatus 11A, for example, is a computer and the like, and performs processing for information inputted from the display apparatus 12 with an input/output function (hereinafter, referred to as a display apparatus) or the communication apparatus 13A and outputs processed information to the display apparatus 12 or the communication apparatus 13A.

The display apparatus 12, for example, is a touch panel and the like, and displays information outputted from the processing apparatus 11A on a screen or inputs information inputted to the screen to the processing apparatus 11 A. Furthermore, the display apparatus 12 includes a microphone and a speaker, and outputs voice outputted from the processing apparatus 11A from the speaker or inputs voice inputted from the microphone to the processing apparatus 11 A. As the display apparatus 12, a display and the like of a navigation system is available, and another display may be provided separately from the display.

The communication apparatus 13A, for example, is a mobile communication apparatus of a LTE (registered trademark: Long Term Evolution) standard and the like and a wireless LAN communication apparatus of a Wi-Fi (registered trademark: Wireless Fidelity) standard and the like, and communicates with the recognition server 21 or the processing server 22 through a wireless network 40.

The recognition server 21, for example, is a sever computer and the like having a storage device and has a recognition database 23 in the storage device. The recognition database 23 records recognition information (image information or voice information) on an apparatus and equipment provided in the vehicle 10A, in order to recognize images or voice. The recognition server 21 recognizes images or voice transmitted from the communication apparatus 13A or the portable terminal 30 via the wireless network 40 based on the recognition database 23, and transmits the recognition result to the processing server 22.

The recognition server 21, for example, recognizes the images or the voice by using artificial intelligence of a neural network and the like. In this case, it is sufficient if the recognition server 21 records recognition information, which is recorded on the recognition database 23, by using learning (mechanical learning) by the artificial intelligence.

The processing server 22, for example, is also a sever computer and the like having a storage device and has a FAQ (frequent asked questions) database 24 in the storage device. The FAQ database 24 records explanation information (character information, voice information, image information, moving image information and the like) for the explanation of the apparatus and the equipment provided in the vehicle 10A and priority information, in which a priority for each type of explanation information is given in order to select information corresponding to the recognition result. As each type of explanation information, explanation content of each item of instruction manuals of the apparatus and the equipment of the vehicle 10A is available, and it is sufficient if the contents are stored as character information, voice information, and image information. If necessary, it is sufficient if moving image information on manipulation or operations of the apparatus and the equipment is stored.

The processing server 22 selects one piece or a plurality of pieces of explanation information corresponding to the recognition result of the images or the voice transmitted from the recognition server 21 based on the FAQ database 24, and transmits the selected explanation information to the communication apparatus 13A of the vehicle 10A or the portable terminal 30 via the wireless network 40 (the processing unit).

To the aforementioned recognition server 21, images or voice serving as inquiry information is transmitted from a driver or a passenger of another vehicle 10A by using the portable terminal 30 as well as a driver or a passenger of a specific vehicle 10A, and the recognition server 21 transmits a recognition result obtained by recognizing the images or the voice to the processing server 22. Then, the processing server 22, for example, uses artificial intelligence of a neural network and the like, learns a priority for explanation information based on a selection history of the explanation information on the recognition result, in other words, based on an inquiry history from many drivers or passengers, and updates the priority information (the learning unit). The priority is high in explanation information frequently selected by the processing server 22, that is, explanation information frequently inquired from many drivers or passengers.

The portable terminal 30, for example, is a smart phone, has a wireless communication function of the LTE standard, the Wi-Fi standard and the like and a camera function, and is carried by a driver or a passenger. In the portable terminal 30, a dedicated program is installed, and the portable terminal 30 transmits images captured by a driver or a passenger, or inputted characters and voice to the recognition server 21 or receives information from the processing server 22 by using the dedicated program.

In the recognition server 21 or the processing server 22, identification information (for example, a PIN code and the like) of the portable terminal 30 and identification information (for example, a PIN code and the like) of the communication apparatus 13A in the vehicle 10A are associated with each other and registered in advance. Therefore, a processing result for information inputted from the portable terminal 30 can be transmitted to the associated communication apparatus 13A of the vehicle 10A as well as the portable terminal 30.

In the embodiment, the recognition server 21 and the processing server 22 are independently provided. However, the recognition server 21 and the processing server 22 may be formed by one server computer and in this case, the recognition database 23 and the FAQ database 24 may also be formed by one storage device. The processing server 22 has the functions of the aforementioned processing unit and learning unit, but the functions of the aforementioned processing unit and learning unit may be performed by separate different server computers. In this case, the FAQ database 24 may also be provided by a database including the explanation information and a database including the priority information.

Next, for the information providing system of a vehicle of the present embodiment having the aforementioned configuration, an example of transmission/reception of information in the display apparatus 12 and the portable terminal 30 will be described with reference to Figs. 2, 3A and 3B.

### Step S1

When a driver or a passenger does not know manipulation method or functions of the apparatus or the equipment of the vehicle 10A, for example, when the driver or the passenger does not know parts in the engine room or manipulation method or meanings of switches or icons in the vehicle, the driver or the passenger captures a picture of an inquiry target by using the dedicated program of the portable terminal 30, and transmits the captured picture to the recognition server 21 via the wireless network 40 as inquiry information.

For example, when the driver or the passenger does not know manipulation method or functions of a switch near a select lever of the vehicle 10A, it is sufficient if the driver or the passenger captures a picture Q1 of the inquiry target with the portable terminal 30 as illustrated in Fig. 3A and transmits the picture to the recognition server 21. When the driver or the passenger knows the name of the place, the driver or the passenger may input voice or a character to the portable terminal 30, instead of the picture Q1, and transmit the inputted voice or character to the recognition server 21 as inquiry information.

### Step S2

The recognition server 21 recognizes the inquiry target indicated by the picture Q1 transmitted from the portable terminal 30 via the wireless network 40 based on the recognition database 23, and transmits a recognition result to the processing server 22.

For example, the picture Q1 illustrated in Fig. 3A can be recognized as a "battery charge switch", a "selector lever manipulation icon", and a "battery save switch" from the left and the right. As described above, when a plurality of switches and the like are included in the picture Q1, all recognizable things are recognized.

Even when voice information is transmitted instead of the picture Q1, the recognition server 21 recognizes the voice information based on the recognition database 23 and transmits a recognition result to the processing server 22. On the other hand, when character information is transmitted, the recognition server 21 transmits the transmitted character information to the processing server 22 as a recognition result. In addition, in a case where voice or a character is inputted to the portable terminal 30, when a part of a name is erroneously inputted, the recognition server 21 finds voice close to a recognition result of the inputted voice or a character close to the inputted character from the recognition database 23 and transmits the found voice or character to the processing server 22 as a recognition result.

### Step S3

The processing server 22 selects one piece or a plurality of pieces of explanation information corresponding to the recognition result transmitted from the recognition server 21, from the FAQ database 24. When the explanation information corresponding to the recognition result is not found, the processing server 22 selects one piece or a plurality of pieces of explanation information corresponding to information close to the recognition result from the FAQ database 24. Based on a selection history of the selected explanation information, the processing server 22 learns a priority for the explanation information and updates the priority information.

### Step S4

The processing server 22 transmits the selected explanation information to the communication apparatus 13A via the wireless network 40, and the explanation information transmitted from the processing server 22 to the communication apparatus 13A is inputted to the display apparatus 12 via the processing apparatus 11 A. When one piece of the explanation information is selected by the processing server 22, the display apparatus 12 displays the explanation information. When a plurality of pieces of the explanation information is selected by the processing server 22, the display apparatus 12 displays items of the plurality of types of explanation information in the form of a list in a descending order of priorities. Furthermore, the processing server 22 may transmit the selected explanation information to the portable terminal 30 via the wireless network 40, and in this case, it is sufficient if the portable terminal 30 performs display similarly to the display apparatus 12.

For example, with regard to the picture Q1 illustrated in Fig. 3A, "want to know meaning of charge mode", "want to know meaning of save mode", and "want to know meaning of B" are displayed from the top to the bottom in a descending order of priorities as indicated by a display field A1 of the display apparatus 12 of Fig. 3B. In this case, on the left side of the items of each explanation information, images indicating the "battery charge switch", the "battery save switch", and the "selector lever manipulation icon" recognized by the recognition server 21 are displayed so that a correspondence relation with the picture Q1 captured by the portable terminal 30 is known.

When all the items of the explanation information are not displayed on the screen of the display apparatus 12, a scroll bar C1 is provided in the display field A1 as illustrated in Fig. 3B so that the display field A1 is scroll-displayed in an up and down direction and thus undisplayed items of the explanation information can also be displayed.

Manipulation assist information (character information, voice information, image information and the like) is also transmitted from the processing server 22, and when the items of the explanation information are displayed on the display apparatus 12, the manipulation assist information is simultaneously outputted from the display apparatus 12. In the embodiment, the processing server 22 transmits the manipulation assist information including voice information to the display apparatus 12 side, and voice of "if you touch an inquiring switch, we will teach how to use it" is outputted from the speaker of the display apparatus 12.

The manipulation assist information from the processing server 22 may be transmitted to the portable terminal 30, and in the embodiment, the manipulation assist information including character information is transmitted to the portable terminal 30 side and character information of "if you touch an inquiring switch, we will teach how to use it" is displayed on the portable terminal 30 as indicated by a message M1 of Fig. 3A. Particularly, when the processing apparatus 11A, the display apparatus 12, and the communication apparatus 13A are not able to start to operate because the battery of the vehicle 10A is dead or there are some problems, it is sufficient if the items of the explanation information or the manipulation assist information to be displayed on the display apparatus 12 is displayed on the portable terminal 30.

### Steps S5 and S6

The display apparatus 12 or the portable terminal 30 waits for manipulation input (voice input, input by touch manipulation, and the like) from a driver or a passenger with respect to the displayed items of the explanation information or manipulation assist information, and when there is the manipulation input, explanation information corresponding to the manipulation input is provided to the display apparatus 12 or the portable terminal 30.

For example, in the display field A1 of the display apparatus 12 illustrated in Fig. 3B, when a driver touches a region displayed as "want to know meaning of charge mode", the manipulation input is transmitted to the processing server 22 via the processing apparatus 11A, the communication apparatus 13A, and the recognition server 21. The processing server 22 takes out explanation information (character information, voice information, image information, moving image information and the like) corresponding to "want to know meaning of charge mode" from the FAQ database 24, and transmits the explanation information to the communication apparatus 13A or the portable terminal 30. The processing apparatus 11A displays the explanation information transmitted via the communication apparatus 13A on the screen of the display apparatus 12, and the portable terminal 30 displays the transmitted explanation information on a screen thereof.

Furthermore, for example, for the display of the display field A1 of the display apparatus 12 illustrated in Fig. 3B, when a driver inputs voice from the microphone of the display apparatus 12 by pronouncing a "charge mode", the manipulation input is transmitted to the recognition server 21 via the processing apparatus 11A and the communication apparatus 13A, the inputted voice is recognized by the recognition server 21, and then the recognition result is transmitted to the processing server 22. The processing server 22 takes out explanation information (character information, voice information, image information, moving image information and the like) corresponding to the recognition result from the FAQ database 24, and transmits the explanation information to the communication apparatus 13A or the portable terminal 30. The processing apparatus 11A displays the explanation information transmitted via the communication apparatus 13A on the screen of the display apparatus 12, and the portable terminal 30 displays the transmitted explanation information on the screen thereof.

### Step S7

When there is end manipulation, the series of operations are ended, and when there is no end manipulation, the procedure returns to step S5. That is, until there is the end manipulation, steps S5 and S6 are repeated, and transmission/reception of information is performed on an interactive basis so that desired explanation information is displayed on the display apparatus 12 or the portable terminal 30. As the end manipulation, for example, a button B1 for the end manipulation displayed on the display apparatus 12 is touched by a driver or a passenger so that the screen of the display apparatus 12 returns to an initial screen and thus the series of operations are ended.

In the present embodiment, as described above, for an inquiry from a driver or a passenger regarding an apparatus or equipment of a vehicle, since the portable terminal 30 captures pictures to make an inquiry, the intention of a driver or a passenger who has difficulty in conversion is understood so that it is possible to appropriately provide necessary information. As a consequence, vehicle's convenience is improved.

### Second Embodiment

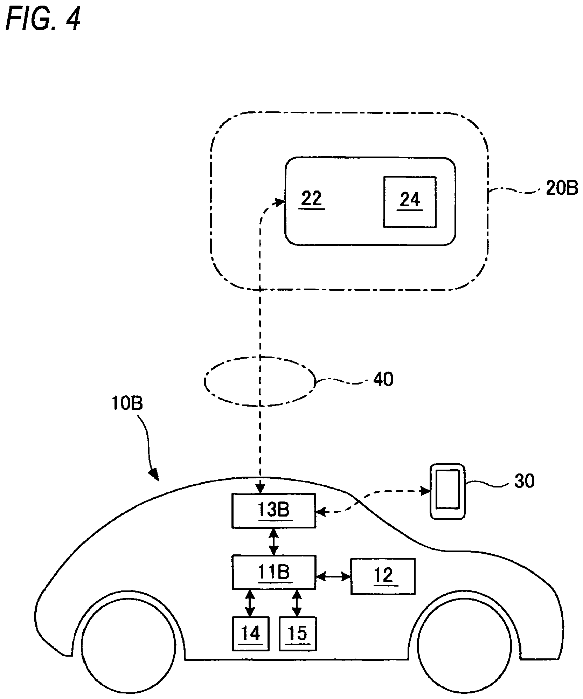

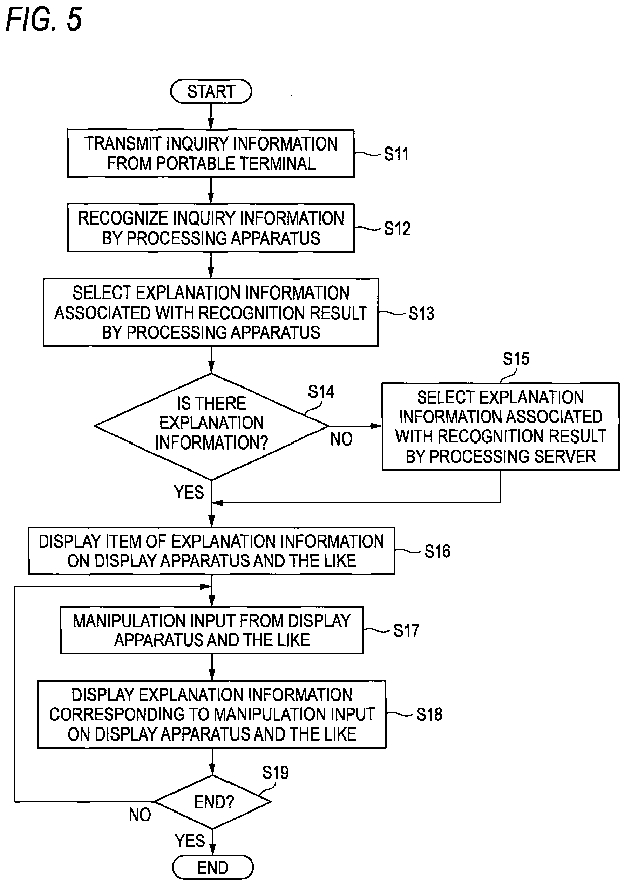

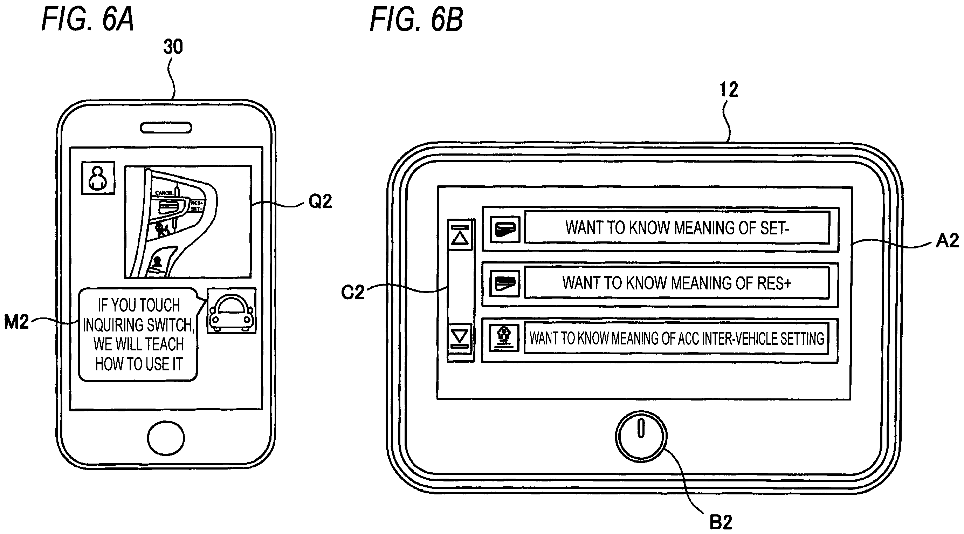

Fig. 4 is a schematic configuration diagram illustrating an information providing system of a vehicle of the present embodiment. Fig. 5 is a flowchart for explaining an example of transmission/reception of information in the information providing system of a vehicle illustrated in Fig. 4. Figs. 6A and 6B are diagrams illustrating an example of transmission/reception of information in a display apparatus and a portable terminal in the information providing system of a vehicle illustrated in Fig. 4.

As illustrated in Fig. 4, the information providing system of a vehicle of the present embodiment has a processing apparatus 11 B (a recognition unit and a processing unit), a display apparatus 12, a communication apparatus 13B, a recognition database 14, and a FAQ database 15, which are provided in a vehicle 10B, and further has a processing server 22 (a processing unit and a learning unit) provided on a cloud 20B. Moreover, the information providing system has a portable terminal 30. Fig. 4 illustrates one vehicle 10B and one portable terminal 30; however, the processing server 22 on the cloud 20B corresponds to a plurality of vehicles 10B and a plurality of portable terminals 30.

As apparent from the comparison of the configuration illustrated in Fig. 1 of the first embodiment and the configuration illustrated in Fig. 4 of the present embodiment, there are the recognition server 21 and the processing server 22 on the cloud 20A in the first embodiment, but in the present embodiment, there is only the processing server 22 on the cloud 20B and the processing apparatus 11B, the communication apparatus 13B, the recognition database 14, and the FAQ database 15 of the vehicle 10B are changed to a configuration for performing the function of the recognition server 21 and some functions of the processing server 22 in the first embodiment.

That is, in the first embodiment, the communication apparatus 13A, the portable terminal 30, the recognition server 21, and the processing server 22 need to be in an on-line state, but in the present embodiment, the communication apparatus 13B and the processing server 22 do not need to be always in an on-line state and it is possible to appropriately provide necessary information to a driver or a passenger even though the communication apparatus 13B and the processing server 22 are in an off-line state.

A detailed configuration of the information providing system of a vehicle of the present embodiment will be described. The processing apparatus 11B, for example, is a computer, and processes information inputted from the display apparatus 12 or the communication apparatus 13B and outputs processed information to the display apparatus 12 or the communication apparatus 13B, similarly to the processing apparatus 11A described in the first embodiment.

In addition, the processing apparatus 11 B recognizes images or voice transmitted from the portable terminal 30 via the communication apparatus 13B based on the recognition database 14 (the recognition unit), and selects one piece or a plurality of pieces of explanation information corresponding to the recognition result of the images or the voice based on the FAQ database 15, and outputs the selected explanation information to the display apparatus 12, or transmits the selected explanation information to the portable terminal 30 via the communication apparatus 13B (the processing unit). The processing apparatus 11 B, for example, recognizes the images or the voice by using artificial intelligence of a neural network and the like.

Furthermore, the communication apparatus 13B, for example, is a communication apparatus of a LTE standard, a Wi-Fi standard and the like, which has a plurality of wireless communication functions, basically communicates with the portable terminal 30, and communicates with the processing server 22 via the wireless network 40 if necessary.

The recognition database 14 is equivalent to the recognition database 23 described in the first embodiment. Specifically, the recognition database 14 records recognition information (image information or voice information) on an apparatus and equipment provided in the vehicle 10B in order to recognize images or voice. The recognition information recorded on the recognition database 14 is information learned in advance by artificial intelligence.

Furthermore, the FAQ database 15 is also equivalent to the FAQ database 24 described in the first embodiment. Specifically, the FAQ database 15 records explanation information (character information, voice information, image information, moving image information and the like) for the explanation of the apparatus and the equipment provided in the vehicle 10B and priority information in which a priority for each type of explanation information is given in order to select information corresponding to the recognition result. The priority information recorded on the FAQ database 15 is also information learned in advance by artificial intelligence.

In the present embodiment, the processing apparatus 11 B has the aforementioned function of the recognition unit and function of the processing unit; however, the processing apparatus 11B may be separately configured to different computers according to functions. Furthermore, the recognition database 14 and the FAQ database 15 may be provided to one storage device or may be separately provided to storage devices different from each other.

In the present embodiment, the display apparatus 12 may be equal to the display apparatus 12 described in the first embodiment. Furthermore, the portable terminal 30 may be equal to the portable terminal 30 described in the first embodiment; however, in the present embodiment, since the portable terminal 30 directly communicates with only the communication apparatus 13B, other terminals, for example, a tablet type terminal and the like may be used as long as it is a portable terminal having at least a wireless communication function of a Wi-Fi standard, a camera function and the like. Furthermore, since the portable terminal 30 directly communicates with only the communication apparatus 13B, the identification information of the portable terminal 30 and the identification information of the communication apparatus 13B don't need to be associated with each other and be registered in the processing server 22 as in the first embodiment.

In the present embodiment, the processing server 22 may have at least the function of the learning unit described in the first embodiment. In such a case, the processing apparatus 11 B transmits a selection history of explanation information in the processing apparatus 11B to the processing server 22 by using the communication apparatus 13B via the wireless network 40 when it is appropriate, or the processing server 22 performs learning based on the transmitted selection history of explanation information and updates the priority information in the FAQ database 24 (the learning unit). When the priority information is updated in the FAQ database 24, the processing server 22 transmits the priority information updated in the FAQ database 24 to the communication apparatus 13B via the wireless network 40, and the processing apparatus 11B updates the priority information in the FAQ database 15 by using the priority information updated in the FAQ database 24.

Furthermore, in the present embodiment, the processing server 22 may further have the function of the processing unit described in the first embodiment. That is, the processing server 22 may be equal to the processing server 22 described in the first embodiment. For example, when there is no information necessary for the FAQ database 15, it is sufficient if the processing apparatus 11 B transmits the recognition result of the images or the voice to the processing server 22 via the communication apparatus 13B, and it is sufficient if the processing server 22 selects one piece or a plurality of pieces of explanation information corresponding to the recognition result of the images or the voice transmitted from the communication apparatus 13B, from the FAQ database 24, and transmits the selected information to the communication apparatus 13B of the vehicle 10B via the wireless network 40 (the processing unit).

That is, in the present embodiment, the recognition and the processing for the inquiry information from the portable terminal 30 are basically performed by the processing apparatus 11B, and when there is no information necessary for the FAQ database 15, necessary information is acquired from the processing server 22 (the FAQ database 24).

Next, for the information providing system of a vehicle of the present embodiment having the aforementioned configuration, an example of transmission/reception of information in the display apparatus 12 and the portable terminal 30 will be described with reference to Figs. 5, 6A and 6B.

### Step S11

When a driver or a passenger does not know manipulation or functions of the apparatus or the equipment of the vehicle 10B, the driver or the passenger captures a picture of an inquiry target by using the dedicated program of the portable terminal 30, and transmits the captured picture to the communication apparatus 13B as inquiry information.

For example, when the driver or the passenger does not know manipulation or functions of a switch near a steering of the vehicle 10B, it is sufficient if the driver or the passenger captures a picture Q2 of the inquiry target with the portable terminal 30 as illustrated in Fig. 6A and transmits the picture to the communication apparatus 13B. When the driver or the passenger knows the name of the place, the driver or the passenger may input voice or a character to the portable terminal 30, instead of the picture Q2, and transmit the inputted voice or character to the communication apparatus 13B as inquiry information.

### Step S12

The processing apparatus 11B recognizes the inquiry target indicated by the picture Q2 transmitted from the portable terminal 30 via the communication apparatus 13B based on the recognition database 14.

For example, the picture Q2 illustrated in Fig. 6A is recognized as a "CANCEL switch", a "RES+switch", a "SET-switch", an "ACC ON/OFF switch", and an "ACC inter-vehicle setting switch" from the top to the bottom. As described above, when a plurality of switches and the like are in the picture Q2, all recognizable things are recognized.

Even when voice is transmitted instead of the picture Q2, the processing apparatus 11B recognizes the voice based on the recognition database 14. On the other hand, when a character is transmitted, the processing apparatus 11 B employs the transmitted character as a recognition result. In addition, in a case where voice or a character is inputted to the portable terminal 30, when a part of a name is erroneously inputted, the processing apparatus 11B finds voice close to a recognition result of the inputted voice or a character close to the inputted character from the recognition database 14 and employs the found voice or character as a recognition result.

### Step S 13

The processing apparatus 11B selects one piece or a plurality of pieces of explanation information corresponding to the recognition result from the FAQ database 15. In addition, the processing apparatus 11B transmits a selection history of explanation information in the processing apparatus 11B to the processing server 22 by using the communication apparatus 13B when it is appropriate, or the processing server 22 performs learning based on the transmitted selection history of explanation information and updates the priority information in the FAQ database 24.

### Step S14

When explanation information corresponding to the recognition result exists in the FAQ database 15, the procedure proceeds to step S16, but when the explanation information corresponding to the recognition result does not exist in the FAQ database 15, the procedure proceeds to step S15. That is, when the processing apparatus 11B does not find the explanation information corresponding to the recognition result from the FAQ database 15, the procedure proceeds to step S 15.

### StepS15

When the processing apparatus 11B does not find the explanation information corresponding to the recognition result from the FAQ database 15, the processing apparatus 11 B transmits the recognition result to the processing server 22 via the communication apparatus 13B. The processing server 22 selects one piece or a plurality of pieces of explanation information corresponding to the recognition result, which is transmitted from the processing apparatus 11B, from the FAQ database 24. In addition, when the processing server 22 does not find the explanation information corresponding to the recognition result, the processing server 22 selects one piece or a plurality of pieces of explanation information corresponding to information close to the recognition result from the FAQ database 24. Based on a selection history of the selected explanation information, the processing server 22 learns a priority for the explanation information and updates the priority information.

### Step S16

When the explanation information corresponding to the recognition result is selectable from the FAQ database 15, the processing apparatus 11B outputs the selected explanation information to the display apparatus 12. When one piece of the explanation information is selected by the processing apparatus 11B, the display apparatus 12 displays the explanation information. When a plurality of pieces of the explanation information is selected by the processing apparatus 11B, the display apparatus 12 displays items of the plurality of types of explanation information in the form of a list in a descending order of priorities. Furthermore, the processing apparatus 11B may transmit the selected explanation information to the portable terminal 30 via the communication apparatus 13B, and in this case, it is sufficient if the portable terminal 30 performs display similarly to the display apparatus 12.

On the other hand, when the explanation information corresponding to the recognition result is not selectable from the FAQ database 15, the processing server 22 transmits the selected explanation information to the communication apparatus 13B via the wireless network 40, and the explanation information transmitted to the communication apparatus 13B from the processing server 22 is inputted to the display apparatus 12 via the processing apparatus 11B. When one piece of the explanation information is selected by the processing server 22, the display apparatus 12 displays the explanation information. When a plurality of pieces of the explanation information is selected by the processing server 22, the display apparatus 12 displays items of the plurality of types of explanation information in the form of a list in a descending order of priorities. Furthermore, the processing apparatus 11B may transmit the explanation information transmitted from the processing server 22 to the portable terminal 30 via the communication apparatus 13B, and in this case, it is sufficient if the portable terminal 30 performs display similarly to the display apparatus 12.

For example, for the picture Q2 illustrated in Fig. 6A, "want to know meaning of SET-", "want to know meaning of RES+", and "want to know meaning of ACC inter-vehicle setting" are displayed from the top to the bottom in a descending order of priorities as indicated in a display field A2 of the display apparatus 12 of Fig. 6B. In this case, on the left side of the items of each explanation information, images indicating the "SET-switch", the "RES+switch", and the "ACC inter-vehicle setting switch" recognized by the processing apparatus 11B are displayed so that a correspondence relation with the picture Q2 captured by the portable terminal 30 is known.

When all the items of the explanation information are not displayed on the screen of the display apparatus 12, a scroll bar C2 is provided in the display field A2 as illustrated in Fig. 6B so that the display field A2 is scroll-displayed in an up and down direction and thus undisplayed items of the explanation information can also be displayed.

Manipulation assist information (character information, voice information, image information and the like) is also transmitted from the processing apparatus 11B, and when the items of the explanation information are displayed on the display apparatus 12, the manipulation assist information is simultaneously outputted from the display apparatus 12. The processing apparatus 11B transmits the manipulation assist information including voice information to the display apparatus 12 side, and voice of "if you touch an inquiring switch, we will teach how to use it" is outputted from the speaker of the display apparatus 12.

The manipulation assist information from the processing apparatus 11 B may be transmitted to the portable terminal 30, and in the embodiment, the manipulation assist information including character information is transmitted to the portable terminal 30 side and character information of "if you touch an inquiring switch, we will teach how to use it" is displayed on the portable terminal 30 as indicated by a message M2 of Fig. 6A.

### Steps S17 and S18

The display apparatus 12 or the portable terminal 30 waits for manipulation input (voice input, input by touch manipulation, and the like) from a driver or a passenger with respect to the displayed items of the explanation information or manipulation assist information, and when there is the manipulation input, explanation information corresponding to the manipulation input is provided to the display apparatus 12 or the portable terminal 30.

For example, in the display field A2 of the display apparatus 12 illustrated in Fig. 6B, when a driver touches a region displayed as "want to know meaning of SET-", the manipulation input is inputted to the processing apparatus 11B. The processing apparatus 11B takes out explanation information (character information, voice information, image information, moving image information and the like) corresponding to "want to know meaning of SET-" from the FAQ database 15, and outputs the explanation information to the display apparatus 12 or the communication apparatus 13B. The display apparatus 12 displays the outputted explanation information on a screen thereof, and the portable terminal 30 displays the explanation information transmitted via the communication apparatus 13B on a screen thereof.

Furthermore, for example, for the display of the display field A2 of the display apparatus 12 illustrated in Fig. 6B, when a driver inputs voice from the microphone of the display apparatus 12 by pronouncing a "set", the manipulation input is inputted to the processing apparatus 11 B. The processing apparatus 11B recognizes the inputted voice, takes out explanation information (character information, voice information, image information, moving image information and the like) corresponding to the recognition result from the FAQ database 15, and outputs the explanation information to the display apparatus 12 or the communication apparatus 13B. The display apparatus 12 displays the outputted explanation information on the screen thereof, and the portable terminal 30 displays the explanation information transmitted via the communication apparatus 13B on the screen thereof.

### Step S19

When there is end manipulation, the series of operations are ended, and when there is no end manipulation, the procedure returns to step S 17. That is, until there is the end manipulation, steps S17 and S18 are repeated, and transmission/reception of information is performed on an interactive basis so that desired explanation information is displayed on the display apparatus 12 or the portable terminal 30. As the end manipulation, for example, a button B2 for the end manipulation displayed on the display apparatus 12 is touched by a driver or a passenger so that the screen of the display apparatus 12 returns to an initial screen and thus the series of operations are ended.

Also in the present embodiment, as described above, for an inquiry from a driver or a passenger regarding an apparatus or equipment of a vehicle, since the portable terminal 30 captures pictures to make an inquiry, the intention of a driver or a passenger who has difficulty in conversion is understood so that it is possible to appropriately provide necessary information. As a consequence, vehicle's convenience is improved.

The present invention is preferred as an information providing system for an apparatus or equipment of a vehicle.

## Claims

1. An information providing system of a vehicle comprising:
a portable terminal that captures a picture of an inquiry target of an apparatus and equipment of the vehicle and transmits the captured picture;
a recognition unit that recognizes the inquiry target indicated by the picture transmitted from the portable terminal;
a processing unit that has a plurality of pieces of explanation information for explanation of the apparatus and the equipment, and selects and transmits the explanation information corresponding to the inquiry target recognized by the recognition unit; and
a display unit that is provided in the vehicle to display the explanation information transmitted from the processing unit.

2. The information providing system of a vehicle according to claim 1, wherein
the processing unit has priority information in which a priority is given to each type of explanation information and transmits the priority of the explanation information together with the selected explanation information, and
when the plurality of types of explanation information is selected by and transmitted from the processing unit, the display unit displays items of the plurality of types of explanation information in a form of a list in a descending order of priorities.

3. The information providing system of a vehicle according to claim 1 or 2, further comprising:
a learning unit that learns the priority for the explanation information from a selection history of the explanation information and updates priority information.

4. The information providing system of a vehicle according to claim 3, wherein
the recognition unit, the processing unit, and the learning unit are formed by at least one server computer provided on a cloud.

5. The information providing system of a vehicle according to claim 3, wherein
the recognition unit and the processing unit are formed by at least one computer provided in the vehicle, and
the learning unit is formed by one server computer provided on a cloud.
